# EUROPEAN PATENT APPLICATION

(11) **EP 2 110 812 A1**
(43) Date of publication of application: **21.10.2009**
(21) Application number: 08007464.4
(22) Date of filing: 16.04.2008
(51) Int. Cl.: G11B 7/085

(54) **Drive device for driving optical pick-up unit**

(71) Applicant: Philips & Lite-On Digital Solutions Corporation, Neihu District Taipei (TW)
(72) Inventor: Kunze, Norbert, 35578 Wetzlar (DE); Müller, Stefan, 35578 Wetzlar (DE)
(74) Representative: Müller-Boré & Partner Patentanwälte

(57) **Abstract**

The present invention relates to a drive device for driving optical pick-up unit, which comprises an optical pick-up unit (OPU) for reading the information recorded on a disk; a pick-shaft for guiding the OPU's moving direction; two guiding elements which are provided on the pick-shaft and connected with the OPU for moving the OPU on the pick-shaft along its direction; a gear rack for driving the OPU moving forward and back; and a gear wheel for driving the gear rack; the drive device is characterized that the gear wheel engages with the gear rack always outside the area between the two guiding elements during the movement of the OPU.

## Description

### Field of The Invention

The present invention relates to a novel drive device for driving an optical pick-up unit, particularly to a drive device for driving an optical pick-up unit in which the torque generated on the optical pick-up unit (OPU) has constant direction over the stroke of the OPU.

### Background of the Invention

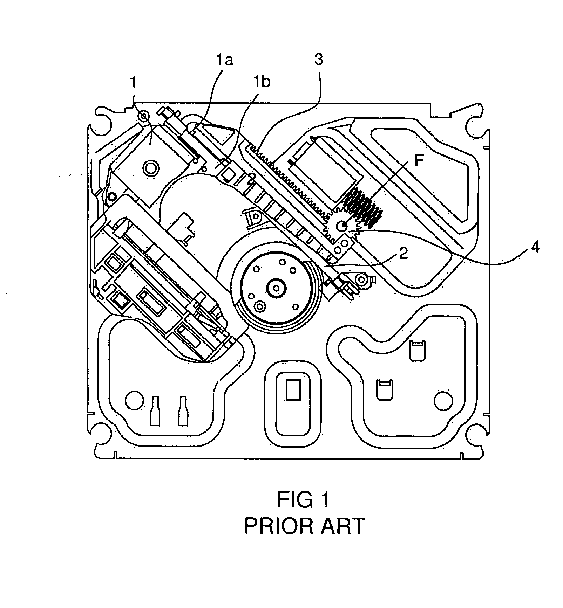

In CD, DVD players, a drive device for driving the optical pick-up unit usually comprises an optical pick-up unit (OPU) 1 for reading the information recorded on a disk; a pick-shaft 2 for guiding the pick-up unit's moving direction; a gear rack 3 for driving the pick-up unit 1 moving forward and back; and a gear wheel 4 for driving the gear rack, as shown in FIG. 1. However, in such a drive device, when the gear wheel 4 drives the gear rack 3, a force (F) will be generated and applied on the gear rack 3, and the force (F) will result in a torque (T) applied on the OPU 1, the direction of the torque (T) will vary depending on the position of the OPU 1.

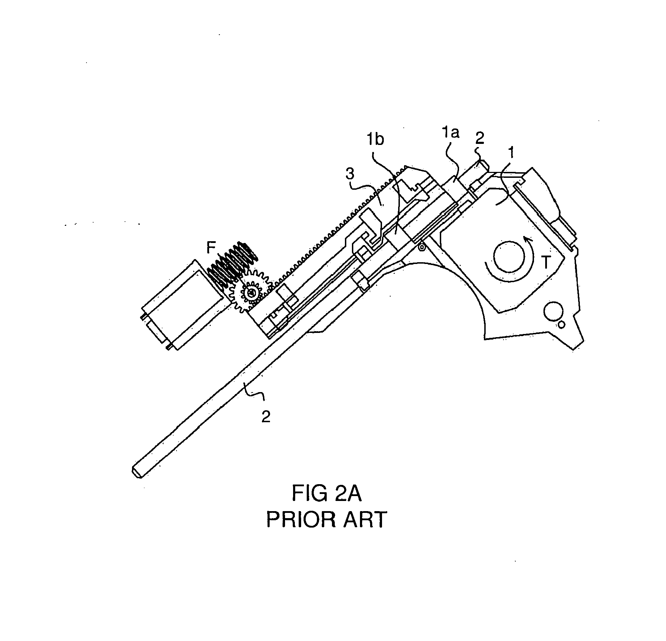

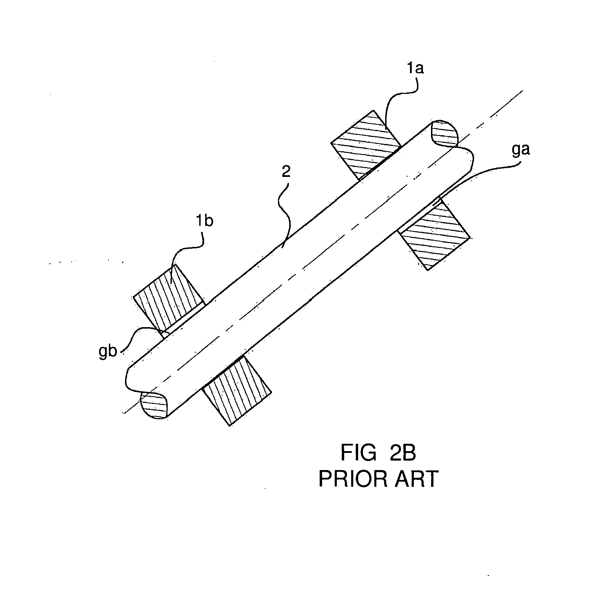

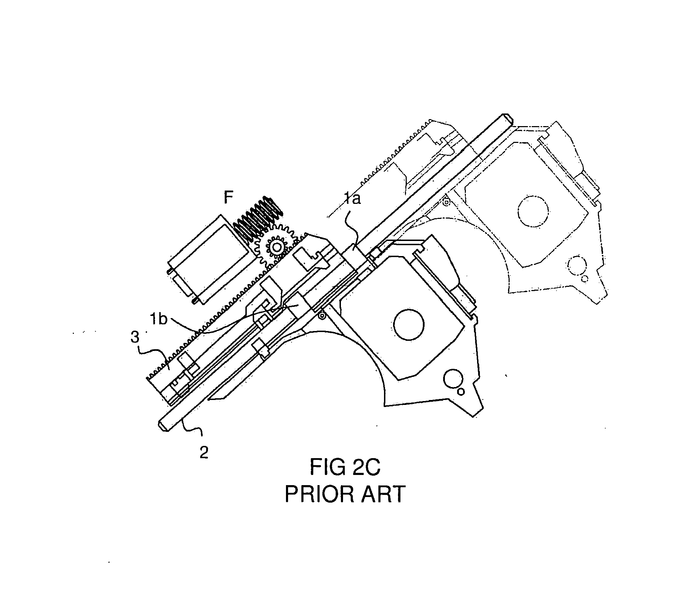

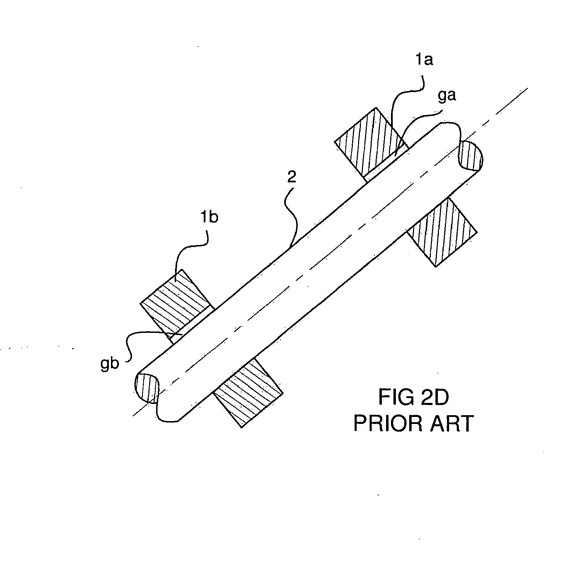

FIG. 2A shows a conventional drive device for driving OPU wherein the OPU is in outer (non-playing) position, FIG. 2B shows an enlargement figure for the two guiding elements 1a and 1b shown in FIG. 2A, FIG. 2C shows a conventional drive device for driving OPU wherein the OPU is in inner (playing) position, and FIG. 2D shows an enlargement figure for the two guiding elements 1a and 1b shown in FIG. 2C. From FIG. 2A and FIG. 2B, it is known that when the OPU 1 is in outer position, the gear wheel 4 applies a force F on the gear rack 3 outside the area between the guiding elements 1a and 1b, and thus result in a torque T on the OPU and results in a tilt angle between the guiding elements 1a, 1b and the pick-shaft 2, i.e. gap a (ga) and gap b (gb) are at different sides of the pick-shaft, and thus results in a certain rotation of the OPU. With the OPU is driven to inner position, as shown in FIG. 2C and FIG. 2D, the force F from the gear wheel 4 applied on the gear rack 3 is located inside the area between the guiding elements 1a and 1b, which results in the gap a (ga) and gap b (gb) being at the same sides of the pick-shaft and thus results in no rotation of the OPU. Accordingly, the OPU tilts on its way from the first (outer) position to the second (inner) position, and thus results in changing grating angle and bad playability of the CD or DVD player.

To avoid this switching behavior of rotation and no-rotation of the OPU depending on the position of the OPU, the present inventors have conducted an investigation on the structure of the drives device for driving an optical pick-up unit and found that allowing the force from the gear wheel always outside the area between the guiding elements can resolve the above disadvantage and thus completed the present invention.

### Summary of the Invention

The present inventors found that the above disadvantage can be resolved by lengthening the gear rack and choosing a position of the gear wheel that guarantees a constant direction of torque applied to the OPU.

Accordingly, the object of the present invention is to provide a drive device for driving optical pick-up unit, which comprises an optical pick-up unit (OPU) for reading the information recorded on a disk; a pick-shaft for guiding the OPU's moving direction; two guiding elements which are provided on the pick-shaft and connected with the OPU for moving the OPU on the pick-shaft along its direction; a gear rack for driving the OPU moving forward and back; and a gear wheel for driving the gear rack; the drive device is **characterized that** the gear wheel engages with and applies a force on the gear rack always outside the area between the two guiding elements during the movement of the OPU.

According to the present invention, the length L_{rack} of the gear rack has to be bigger than the distance D_{ab} between the two guiding elements plus the traveling distance Dₒₚᵤ of the OPU, i.e. L_{rack} >D_{ab} + Dₒₚᵤ; and the traveling distance D_{rack} of the gear rack driven by the gear wheel is equal to the traveling distance Dₒₚᵤ of the OPU.

Another object of the present invention is to provide CD/DVD player, which comprises a drive device for driving optical pick-up unit comprising an optical pick-up unit (OPU) for reading the information recorded on a disk; a pick-shaft for guiding the OPU's moving direction; two guiding elements which are provided on the pick-shaft and connected with the OPU for moving the OPU on the pick-shaft along its direction; a gear rack for driving the OPU moving forward and back; and a gear wheel for driving the gear rack; the CD/DVD player is characterized that in drive device the gear wheel engages with the gear rack always outside the area between the two guiding elements during the movement of the OPU.

### Brief Description of Drawings

The present invention is illustrated more detailed by reference to the accompanying drawings, wherein:
Figure 1 shows a top view of a sledge drives unit for driving an optical pick-up unit in a CD/DVD player;
FIG. 2A shows a conventional drive device for driving OPU wherein the OPU is in outer position, FIG. 2B shows an enlargement figure for the two guiding elements 1a and 1b shown in FIG. 2A, FIG. 2C shows a conventional drive device for driving OPU wherein the OPU is in inner position, and FIG. 2D shows an enlargement figure for the two guiding elements 1a and 1b shown in FIG. 2C; and

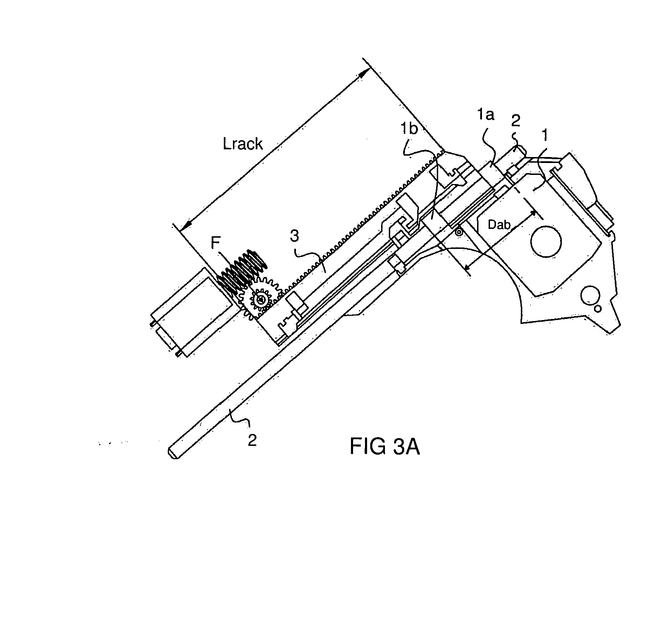

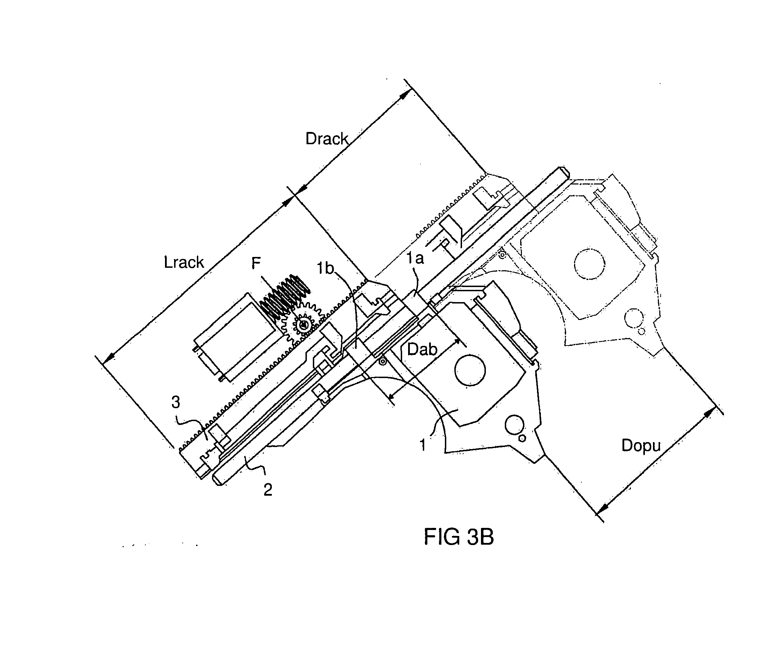

FIG. 3 shows a drive device for driving OPU according to the present invention, wherein the gear rack is lengthened to allow the force resulting from the gear wheel always forcing on the gear rack outside the area between the guiding elements. FIG. 3A shows the state that the OPU is in outer position and FIG. 3B shows the state that the OPU is in inner position.

### Detailed Description of the Invention

In the drawings, the same elements are represented by the same numerals.

The drive device for driving OPU according to the present invention, as shown in FIG. 3, comprises an optical pick-up unit (OPU) 1 for reading the information recorded on a disk; a pick-shaft 2 for guiding the OPU's moving direction; two guiding elements 1a and 1b which are provided on the pick-shaft 2 and connected with the OPU 1 for moving the OPU on the pick-shaft 2 along its direction; a gear rack 3 for driving the OPU moving forward and back; and a gear wheel 4 for driving the gear rack 3; the drive device is characterized that the gear wheel 4 engages with and applies a force on the gear rack 3 always outside the area between the guiding elements 1a and 1b during the movement of the OPU 1.

According to the present invention, as shown in FIG. 3A, when the OPU is in outer position, the gear wheel 4 engages with and applies a force on the gear rack 3 outside the area between the guiding elements 1a and 1b, and, as shown in FIG. 3B, even the OPU moves to the inner position, the gear wheel 4 engages with and applies a force on the gear rack 3 still outside the area between the guiding elements 1a and 1b. It is clearly known that in the present invention the gear wheel 4 engages with and applies a force on the gear rack 3 always outside the area between the two guiding elements 1a and 1b during the movement of the OPU 1.

According to the present invention, by lengthening the gear rack 3 and choosing the position of the gear wheel 4 not to pass or to touch the area between the guiding elements 1a and 1b during the movement of the OPU, i.e. guarantees a constant direction of the torque applied to the OPU 1, it can avoid the switching behavior of rotation and no-rotation of the OPU depending on the position of the OPU.

In the drive device for driving OPU according to the present invention, the length L_{rack} of the gear rack 3 is more than the distance D_{ab} between the guiding elements 1a and 1b plus the traveling distance Dₒₚᵤ of the OPU, i.e. L_{rack} >D_{ab} + Dₒₚᵤ; and the traveling distance D_{rack} of the gear rack 3 driven by the gear wheel 4 is equal to the traveling distance D_{rack} of the OPU, as shown in FIG. 3.

According to the present invention, the gear wheel 4 drives the gear rack 3 moving a distance D_{rack} and thus the OPU 1 also travels a distance Dₒₚᵤ (=D_{rack}) and since the gear rack 3 has a length L_{rack} what is more than the distance Dₒₚᵤ plus the distance D_{ab} between the guiding elements 1a and 1b, the gear wheel 4 applies a force on the gear rack always outside the area between the two guiding elements 1a and 1b.

Accordingly, the OPU keeps its way from the outer position to the inner position without tilting, and thus results in good playability of the CD or DVD player.

Although the drive device of the present application is illustrated with reference to the application used in CD/DVD player for driving an optical pick-up unit, the present sledge drive unit can be used in any application where driving an optical pick-up unit is required.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A drive device for driving optical pick-up unit, which comprises an optical pick-up unit (OPU) for reading the information recorded on a disk; a pick-shaft for guiding the OPU's moving direction; two guiding elements which are provided on the pick-shaft and connected with the OPU for moving the OPU on the pick-shaft along its direction; a gear rack for driving the OPU moving forward and back; and a gear wheel for driving the gear rack; the drive device is **characterized that** the gear wheel engages with the gear rack always outside the area between the two guiding elements during the movement of the OPU.

2. The drive device for driving optical pick-up unit according to claim 1, wherein the length L_{rack} of the gear rack is more than the distance D_{ab} between the guiding elements plus the traveling distance Dₒₚᵤ of the OPU; and the traveling distance D_{rack} of the gear rack driven by the gear wheel is equal to the traveling distance Dₒₚᵤ of the OPU.

3. A CD/DVD player, which comprises a drive device for driving optical pick-up unit comprising an optical pick-up unit (OPU) for reading the information recorded on a disk; a pick-shaft for guiding the OPU's moving direction; two guiding elements which are provided on the pick-shaft and connected with the OPU for moving the OPU on the pick-shaft along its direction; a gear rack for driving the OPU moving forward and back; and a gear wheel for driving the gear rack; the CD/DVD player is **characterized that** in drive device the gear wheel engages with the gear rack always outside the area between the two guiding elements during the movement of the OPU.

4. The CD/DVD player according to claim 3, wherein the length L_{rack} of the gear rack is more than the distance D_{ab} between the guiding elements plus the traveling distance Dₒₚᵤ of the OPU; and the traveling distance D_{rack} of the gear rack driven by the gear wheel is equal to the traveling distance Dₒₚᵤ of the OPU.
